# EUROPÄISCHE PATENTSCHRIFT

(11) **EP 3 695 758 B1**
(45) Veröffentlichungstag und Bekanntmachung des Hinweises auf die Patenterteilung: **15.09.2021**
(21) Anmeldenummer: 19157534.9
(22) Anmeldetag: 15.02.2019
(51) Int. Cl.: A47J 31/36

(54) **BRÜHEINHEIT EINER KAFFEEMASCHINE, KAFFEEMASCHINE UND KAFFEEBRÜHVERFAHREN**
BREW UNIT OF A COFFEE MACHINE, COFFEE MACHINE AND METHOD OF BREWING COFFEE
UNITÉ D'INFUSION POUR MACHINE À CAFÉ, MACHINE À CAFÉ ET MÉTHODE D'INFUSION DE CAFÉ

(43) Veröffentlichungstag der Anmeldung: 19.08.2020
(73) Patentinhaber: Leeo Tech AG, 8804 Au ZH (CH)
(72) Erfinder: BÜHLER, Leo, 8820 Wädenswil (CH)
(74) Vertreter: Patentbüro Paul Rosenich AG

(56) Entgegenhaltungen:
- EP-A1- 0 202 517
- EP-A1- 0 931 491
- EP-B1- 2 135 533

## Beschreibung

Die Erfindung betrifft eine Brüheinheit einer Kaffeemaschine nach Anspruch 1, eine Kaffeemaschine mit einer solchen Brüheinheit nach Anspruch 9 sowie ein Kaffeebrühverfahren unter Verwendung einer solchen Brüheinheit nach Anspruch 10.

Neben sogenannten Kapselkaffeemaschinen, bei denen die Menge des Kaffees in Kapseln zur Verfügung gestellt wird, sind auch Kaffeemaschinen bekannt, bei denen eine gewünschte Menge von gemahlenen Kaffee einer Brüheinheit zugeführt wird. Diese Kaffeemaschinen haben den Vorteil, dass der Benutzer einen Kaffee unabhängig von dem Hersteller der Kaffeemaschine verwenden kann. Weiter kann die Menge des zu brühenden Kaffees flexibel auf die Tassengrösse oder die gewünschte Stärke dosiert werden.

Die EP2135533B1 offenbart eine Kaffeemaschine mit einer Brüheinheit, die einen Brüheinheitskörper und ein an einem Ende des Brüheinheitskörper angeordnetes Auslaufteil aufweist. Der Brüheinheitskörper weist einen Aufnahmebereich und eine Brüheinheitskörper-Einfüllöffnung für den Kaffee auf. In dem Aufnahmebereich des Brüheinheitskörpers ist ein Verpresskolben zum Verpressen des eingebrachten Kaffeepulvers vorgesehen, der in dem Aufnahmebereich des Brüheinheitskörpers relativ zu dem Brüheinheitskörper verfahrbar angeordnet ist. Je nach Menge des eingebrachten Kaffeepulvers wird die Menge des zugeführten Wassers geregelt.

Nachteilig an dieser bekannten Lösung ist, dass der Verdichtungsgrad je nach Mahlung des Kaffeepulvers unterschiedlich ist und die Qualität des zubereiteten Kaffees von Zubereitung zu Zubereitung variieren kann. Des Weiteren ist die Brüheinheit dieser bekannten Lösung schwierig zu reinigen, was ebenfalls auf die Qualität des zubereiteten Kaffees nachteilig auswirkt.

Aufgabe der vorliegenden Erfindung ist es somit, eine Brüheinheit beziehungsweise eine Kaffeemaschine zu schaffen, welche zumindest einen Teil der vorgenannten Nachteile nicht aufweist und insbesondere die Herstellung von Kaffee mit gleichbleibender, hoher Qualität ermöglicht. Weiter ist es die Aufgabe der vorliegenden Erfindung ein Kaffeebrühverfahren unter Verwendung einer solchen Brüheinheit zu schaffen.

Die Aufgabe wird durch die Merkmale der unabhängigen Ansprüche gelöst. Vorteilhafte Weiterbildungen sind in den Figuren und in den jeweils abhängigen Patentansprüchen dargelegt.

Gemäss der Erfindung weist eine Brüheinheit einer Kaffeemaschine einen Brüheinheitskörper, der Brüheinheitskörper einen Aufnahmebereich, eine Brüheinheitskörper-Einfüllöffnung für Kaffeepulver und eine zu der Einfüllöffnung beabstandete Ausgabeöffnung aufweist, ein Auslaufteil, das an einem Ende des Brüheinheitskörper angeordnet ist, einen Hülsenzylinder, der eine Hülsenzylinder-Einfüllöffnung für Kaffeepulver und einen Kolbenaufnahmebereich aufweist sowie in dem Aufnahmebereich des Brüheinheitskörpers relativ zu dem Brüheinheitskörper verfahrbar angeordnet ist, einen Verpresskolben, der in dem Kolbenaufnahmebereich des Hülsenzylinders relativ zu dem Hülsenzylinder verfahrbar angeordnet ist, und einen ersten Motor zum Antrieb des Verpresskolbens auf, wobei der Antrieb des Verpresskolbens drehmomentgesteuert ist.

Mit dem relativ zu dem Hülsenzylinder verfahrbaren Verpresskolben kann der bestimmte beziehungsweise der gewünschte Verdichtungsgrad des Kaffeepulvers einfach erreicht werden. Dabei ist die Brüheinheit aufgrund der geringen Anzahl von Bauteilen sowie dem einfachen Aufbau derselben leicht zu reinigen. Dies gewährleistet die Herstellung von mehreren Kaffees jeweils immer mit der gewünschten hohen Qualität, welche gleichbleibt. Des Weiteren garantiert dies ein dichtes Verschliessen der Brüheinheit, so dass sich keine Kaffeepulverreste in der Kaffeemaschine ablagern.

Über den drehmomentgesteuerten Antrieb mittels des ersten Motors lässt sich das Verfahren des Verpresskolbens exakt steuern, was eine genaue Einstellung des Verdichtungsgrades des Kaffeepulvers ermöglicht. Eine Abstimmung der Verfahrwegs des Verpresskolbens in Relation zu dem Hülsenzylinder ist nicht erforderlich.

Unter dem Begriff "Verdichtungsgrad" wird das Mass des Verpressens des Kaffeepulvers vor dem Zuführen von Wasser verstanden. Der maximale Verdichtungsgrad eines Kaffeepulvers wird u. a. von der Körnung bzw. Pulvergrösse des Kaffeepulvers bestimmt und kann abhängig von Hersteller, Kaffeesorte, Herkunftsregion des Kaffees usw. variieren. Bei Kaffeepulver mit einem hohen Verdichtungsgrad verweilt das zugeführte Wasser während dem Brühvorgang länger im Kaffeepulver bis zum Auslauf, wobei mehr Stoffe und Aromen aus dem Kaffeepulver gelöst werden. Der hergestellte Kaffee hat dann ein sehr intensives und starkes Aroma. Bei Kaffeepulver mit einem niedrigen Verdichtungsgrad durchdringt das zugeführte Wasser während dem Brühvorgang das Kaffeepulver wesentlich schneller, so dass weniger Stoffe und Aromen aus dem Kaffeepulver gelöst werden. Ein derart hergestellter Kaffee wird tendenziell im Vergleich zu einem Kaffee aus höher verdichtetem Kaffeepulver als schwächer im Geschmack empfunden.

Vorzugsweise ist der Verpresskolben relativ zu dem Brüheinheitskörper verfahrbar, womit der Verdichtungsgrad des Kaffeepulvers sehr dosiert und fein einstellbar ist.

Bevorzugt ist ein Verschlussstopfen zum Verschliessen der Hülsenzylinder-Einfüllöffnung des Hülsenzylinders vorgesehen, wobei der Verschlussstopfen in einer Verschiebeöffnung im Brüheinheitskörper geführt ist. Der Verschlussstopfen stellt sicher, dass nach dem Einfüllen des Kaffeepulvers in die Brüheinheit, das Kaffeepulver nicht mehr aus derselben unerwünscht austreten kann, womit die Gefahr einer Verschmutzung der Kaffeemaschine um den Bereich der Brüheinheit herum gebannt bzw. reduziert ist.

Der Verpresskolben weist üblicherweise eine radial umlaufende Dichtung auf. Im verschlossenen Zustand der Hülsenzylinder-Einfüllöffnung des Hülsenzylinders liegt diese Dichtung an dem Verschlussstopfen an, so dass die Dichtung beim Verfahren des Verpresskolbens geschont wird, da diese dabei nicht an den Öffnungsrändern der Hülsenzylinder-Einfüllöffnung des Hülsenzylinders entlanggleitet.

Vorzugsweise ist der Verschlussstopfen relativ zu der Längserstreckung der Verschiebeöffnung versetzbar, womit der Verschlussstopfen in die Hülsenzylinder-Einfüllöffnung des Hülsenzylinders eindringen und diese sicher und dichtend verschliessen kann, sodass keine Ablagerung von Kaffeeresten in der Kaffeemaschine entstehen und somit die Wartungszyklen der Brüheinheit und einer Kaffeemaschine mit einer solchen Brüheinheit verlängert werden.

Bevorzugt ist ein Wasserzuführkanal in dem Verpresskolben vorgesehen, womit das zugeführte Wasser gezielt auf das verdichtete Kaffeepulver zuführbar ist. Durch die genaue und gleichbleibende Zuführung des Wassers lässt sich zusätzlich eine gleichbleibende Qualität des hergestellten Kaffees gewährleisten.

Bevorzugter Weise ist eine Erwärmungseinrichtung in dem Verpresskolben zur Erwärmung des durch den Wasserzuführkanal zugeführten Wassers angeordnet, womit die gewünschte Wassertemperatur nahe bei dem verdichteten Kaffeepulver erfolgt und somit ein Wärmeverlust zwischen der Erwärmungseinrichtung und dem verdichteten Kaffeepulver massgeblich reduziert wird. Damit ist das zugeführte Wasser unmittelbar vor dem verdichteten Kaffeepulver ausreichend temperiert. Ein Abkühlen des zugeführten Wassers vor der Zuführung zum verdichteten Kaffeepulver wird minimiert, so dass die Qualität des zubereiteten Kaffees konstant hochgehalten wird.

Vorteilhaft umfasst die Erwärmungseinrichtung eine vom zugeführten Wasser durchfliessbare Heizpatrone, die einfach im Aufbau und gut in den Verpresskolben integrierbar ist. Die Erwärmungseinrichtung wird vorteilhaft elektrisch aufgeheizt.

In einer Variante können mehrere Erwärmungseinrichtungen vorgesehen sein, wobei beispielsweise nur eine derselben im Verpresskolben angeordnet ist. Damit kann die Erwärmung des Wassers stufenweise erfolgen und die Erwärmungseinrichtung im Verpresskolben kleiner beziehungsweise mit einer geringen Nennleistung ausgebildet werden.

Vorzugsweise ist das Auslaufteil lösbar und separierbar an dem Brüheinheitskörper angeordnet, womit dieses leicht entnehmbar und zu reinigen ist. Zudem ist der Brüheinheitskörper und die darin angeordneten Bauteile einfach zugänglich und daher ebenfalls einfach zu reinigen.

Bevorzugter Weise ist das Auslaufteil mittels eines Drehverschlusses an dem Ende des Brüheinheitskörpers angeordnet, was ein leichtes Lösen sowie Separieren des Auslaufteils ermöglicht. Als besonders vorteilhaft hat sich als Drehverschluss ein Bajonettverschluss erwiesen, da das Auslaufteil damit einfach von dem Brüheinheitskörper entnehmbar und anordnenbar ist.

Vorzugsweise ist eine Auslaufteil-Verriegelungseinrichtung vorgesehen, welche eine Abnahme des Auslaufteils verhindert, wenn sich der Verpresskolben in seiner dem Auslaufteil am nächsten befindlichen, vorderen Stellung befindet. Damit ist die Sicherheit in der Bedienung erhöht, da das Auslaufteil nicht abgenommen werden kann, wenn in der Brüheinheit ein hoher Druck aufgebaut ist oder heisser Kaffee noch durch das Auslaufteil rinnt bzw. sich noch im Auslaufteil befindet.

Die Auslaufteil-Verriegelungseinrichtung umfasst beispielsweise eine Nocke, die am Verpresskolben angeordnet ist und z. B. in den Bajonettverschluss des Auslaufteils eindringt, so dass ein Verdrehen desselben verhindert ist.

Bevorzugt weist das Auslaufteil einen mehrteiligen Auslaufteilkörper auf, womit dieses noch einfacher reinigbar ist.

Bevorzugter Weise sind eine Lochplatte sowie eine Druckplatte vorgesehen, welche vorteilhaft lösbar und separierbar in einer Auslaufteilaufnahme des Auslaufteilkörpers angeordnet sind. Die Lochplatte definiert mit deren Öffnungen den Durchtrittsquerschnitt für das zugeführte Wasser, womit die Verweilzeit des Wassers im verdichteten Kaffeepulver zusätzlich gesteuert ist. Mittels der Druckplatte wird ein Gegendruck erzeugt, welcher die Verweilzeit des Wassers im verdichteten Kaffeepulver zusätzlich beeinflusst und der Druck in der Brüheinheit erhöht. Die lösbare und separierbare Lochplatte sowie die lösbare und separierbare Druckplatte sind infolge deren Separierbarkeit einfach zu reinigen, aber auch bedarfsweise austauschbar, wenn die Kaffeeherstellung in einer anderen Art und Weise beeinflusst werden soll oder diese defekt sind. Die Auslaufteilaufnahme des Auslaufteilkörpers ermöglicht ein reproduzierbares Anordnen der Lochplatte sowie der Druckplatte im Auslaufteil, wodurch die Dichtheit des Auslaufteils sowie die Gebrauchstauglichkeit der Brüheinheit gewährleistet ist.

Vorzugsweise sind an der Lochplatte und/oder an der Druckplatte und/oder an der Auslaufteilaufnahme und/oder an dem Brüheinheitskörper Dichtmittel zur dichtenden Aufnahme vorgesehen, welche im zusammengebauten Zustand der Brüheinheit einen Austritt von Kaffee ausser aus dem Auslauf des Auslaufteils verhindern. Das beziehungsweise die Dichtmittel sind beispielsweise als konstruktive Abschnitte, wie ineinandergreifende Vorsprünge oder Nuten, oder als separate Elemente, wie z. B. Dichtkörper, wie ein O-Ring, ausgebildet.

Eine erfindungsgemässe Kaffeemaschine zeichnet sich dadurch aus, dass sie eine erfindungsgemässe Brüheinheit aufweist, die zumindest einen Teil der zuvor beschriebenen Merkmale aufweist.

Das erfindungsgemässe Kaffeebrühverfahren verwendet eine erfindungsgemässe Brüheinheit, die zumindest einen Teil der zuvor beschriebenen Merkmale aufweist, und ist gekennzeichnet durch die nachfolgend beschriebenen Schritte.

Zuerst wird eine definierte Menge von Kaffeepulver durch die Brüheinheitskörper-Einfüllöffnung des Brüheinheitskörper und die Hülsenzylinder-Einfüllöffnung des Hülsenzylinders in das Innere der Brüheinheit eingefüllt. Der Hülsenzylinder und der Verpresskolben befinden sich relativ zum Brüheinheitskörper in einer Beladeposition, nämlich in einer hinteren, d. h. vom Auslaufteil abgewandten, Stellung in der Brüheinheit. Das eingefüllte Kaffeepulver kommt in Richtung des Auslaufteils vor dem Verpresskolben zu liegen.

Dann wird der Hülsenzylinder mit dem Verpresskolben in Richtung zum Auslaufteil in eine Anlageposition verfahren. In der Anlageposition liegt der Hülsenzylinder dichtend an dem Auslaufteil an.

Nun wird der Verpresskolben relativ zum Hülsenzylinder in Richtung zum Auslaufteil zur Verdichtung des Kaffeepulvers bis zum Erreichen eines bestimmten, vorteilhaft vordefinierten, Verdichtungsgrades desselben verfahren. Dabei wird das lose eingefüllte Kaffeepulver auf das gewünschte Mass verdichtet. Der Verdichtungsgrad ist z. B. abhängig von der gewünschten bzw. voreingestellten Stärke oder des gewünschten Geschmacks des herzustellenden Kaffees und wird individuell oder abgestimmt auf einen Mahlgrad, der durch die Kaffeepulvergrösse definiert ist, bzw. eine Kaffeesorte oder Getränkeart angepasst.

Anschliessend wird Wasser durch den Verpresskolben dem verdichteten Kaffeepulver zugeführt. Dieses Wasser wird mit einer Erwärmungseinrichtung auf eine bestimmte Temperatur, z. B. 86° Celsius bis 96°, für die Zubereitung von Espresso vorteilhaft auf 92° Celsius bis 96° Celsius, gebracht. Mit der vorab definierten Temperatur wird je nach Art des Kaffeegetränks (bspw. Melange, langer Kaffee oder Espresso) die Löslichkeit der Kaffeearomen begünstigt.

Mittels einer Pumpe wird das Wasser auf einen bestimmten Druck, z. B. einen effektiven Druck von 9 bis 10 bar, gebracht. Der Druck wird derart gesteuert bzw. gewählt, dass eine ideale Flussgeschwindigkeit erreicht wird. Für einen doppelten Espresso liegt die ideale Flussgeschwindigkeit beispielsweise bei etwa 1.5 g/s.

Sobald die gewünschte Menge des herzustellenden bzw. zubereitenden Kaffees ausgebracht ist, wird die Zufuhr des Wassers gestoppt. Vorteilhaft wird beim Stoppen der Zufuhr ein leichter Unterdruck erzeugt, so dass ein Nachtropfen aus dem Auslauf des Auslaufteils reduziert oder gar verhindert wird. Der Unterdruck kann beispielsweise auch durch die Umkehr der Wasserzuführrichtung erreicht bzw. durch diese unterstützt werden.

Das durchflossene Kaffeepulver wird nachfolgend auch als Kaffeesatz bezeichnet.

In einem nachfolgenden Schritt wird der Verpresskolben erneut relativ zum Hülsenzylinder in Richtung zum Auslaufteil verfahren, wobei der Kaffeesatz nochmals leicht verdichtet wird. Dabei wird Restwasser aus dem Kaffeesatz entfernt bzw. reduziert.

Anschliessend wird der Verpresskolben in Gegenrichtung vom Auslaufteil relativ zum Hülsenzylinder in eine Entlastungsposition verfahren, wobei sich der Kaffeesatz von dem Auslaufteil löst, da ein Unterdruck im Hülsenzylinder entsteht. In der Entlastungsposition des Verpresskolbens ist das Auslaufteil wieder in einem druckfreien Zustand.

Nun wird zumindest der Hülsenzylinder in Gegenrichtung zum Auslaufteil in eine erste Rückfahrposition unter Freigabe der Ausgabeöffnung des Brüheinheitskörpers verfahren, wobei der Kaffeesatz durch die Ausgabeöffnung des Brüheinheitskörpers beispielsweise in einen Auffangbehälter der Kaffeemaschine fällt. In der ersten Rückfahrposition ist der Hülsenzylinder nicht mehr in Anlage mit dem Auslaufteil.

Anschliessend wird der Hülsenzylinder mit dem Verpresskolben in Gegenrichtung zum Auslaufteil in die Beladeposition verfahren, womit erneut Kaffeepulver in die Brüheinheit einfüllbar ist und der Vorgang zum Herstellen eines Kaffees erneut beginnen kann.

Dieses Kaffeebrühverfahren gewährleistet eine Herstellung von Kaffee mit gleichbleibender, hoher Qualität und Eigenschaften, wie Aromen. Zudem ist das Kaffeebrühverfahren insbesondere flexibel im Hinblick auf die Kaffeesorten und Mahlgrad des Kaffeepulvers.

Vorzugsweise wird vor dem Verfahren des Hülsenzylinders in Richtung zum Auslaufteil in die Anlageposition der Hülsenzylinder mit dem Verpresskolben in eine Verschliessposition verfahren, wobei der Verschlussstopfen in die Hülsenzylinder-Einfüllöffnung des Hülsenzylinders diese verschliessend versetzt wird, und nachher der Hülsenzylinder mit dem Verpresskolben unter Mitnahme des Verschlussstopfens in die Anlageposition verfahren wird. Dadurch ist die Hülsenzylinder-Einfüllöffnung des Hülsenzylinders verschlossen und beim Verfahren des Hülsenzylinders kann ein Austritt des Kaffeepulvers ausserhalb der Brüheinheit verhindert werden.

Bevorzugt wird beim Verfahren des Hülsenzylinders in Gegenrichtung zum Auslaufteil in die Beladeposition der Verschlussstopfen aus der Hülsenzylinder-Einfüllöffnung des Hülsenzylinders versetzt, so dass diese Hülsenzylinder-Einfüllöffnung für einen nachfolgenden Einfüllvorgang mit Kaffeepulver wieder offen ist.

Vorzugsweise erfolgt der Verfahrweg des Verpresskolbens zum Erreichen des bestimmten Verdichtungsgrades des Kaffeepulvers durch einen Motor gesteuert, womit sich einfach der gewünschte Verdichtungsgrad des Kaffeepulvers einstellen lässt.

Besonders vorteilhaft erfolgt die Steuerung anhand des Motorendrehmoments, was eine sehr genaue, reproduzierbare Verdichtung des Kaffeepulvers ermöglicht. Dabei erfolgt auch eine Berücksichtigung des Mahlgrads bzw. der Körnung des Kaffeepulvers beim Verdichten desselben, womit in vorteilhafter Weise eine gleichmässige Qualität des hergestellten Kaffees gegeben ist.

Bevorzugt wird das Wasser durch den Verpresskolben zugeführt, womit das Wasser gezielt in das verdichtete Kaffeepulver einbringbar ist und damit eine gleichmässige, hohe Qualität des hergestellten Kaffees zusätzlich gewährleistet wird.

Bevorzugter Weise wird während dem Zuführen das Wasser in der in dem Verpresskolben vorgesehenen Erwärmungseinrichtung erwärmt, womit Wärmeverluste zwischen der Erwärmung des Wassers und dem Ausbringen des Kaffees reduziert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Kaffeemaschine mit einer erfindungsgemässen Brüheinheit in einer ersten Stellung in einem schematischen Längsschnitt,
- Fig. 2: die Brüheinheit gemäss Figur 1 in einer zweiten Stellung,
- Fig. 3: die Brüheinheit gemäss Figur 1 in einer dritten Stellung,
- Fig. 4: die Brüheinheit gemäss Figur 1 in einer vierten Stellung,
- Fig. 5: die Brüheinheit gemäss Figur 1 in einer fünften Stellung,
- Fig. 6: die Brüheinheit gemäss Figur 1 in einer sechsten Stellung,
- Fig. 7: die Brüheinheit gemäss Figur 1 in einer siebten Stellung,
- Fig. 8: die Brüheinheit gemäss Figur 1 in einer achten Stellung,
- Fig. 9: die Brüheinheit gemäss Figur 1 in einer neunten bzw. in der ersten Stellung,
- Fig. 10: den Brüheinheitkörper der Brüheinheit gemäss Figur 1 in einer perspektivischen Darstellung.
- Fig. 11: das Auslaufteil der Brüheinheit gemäss Figur 1 in einer ersten perspektivischen Darstellung, und
- Fig. 12: das Auslaufteil gemäss Fig. 11 in einer zweiten perspektivischen Darstellung.

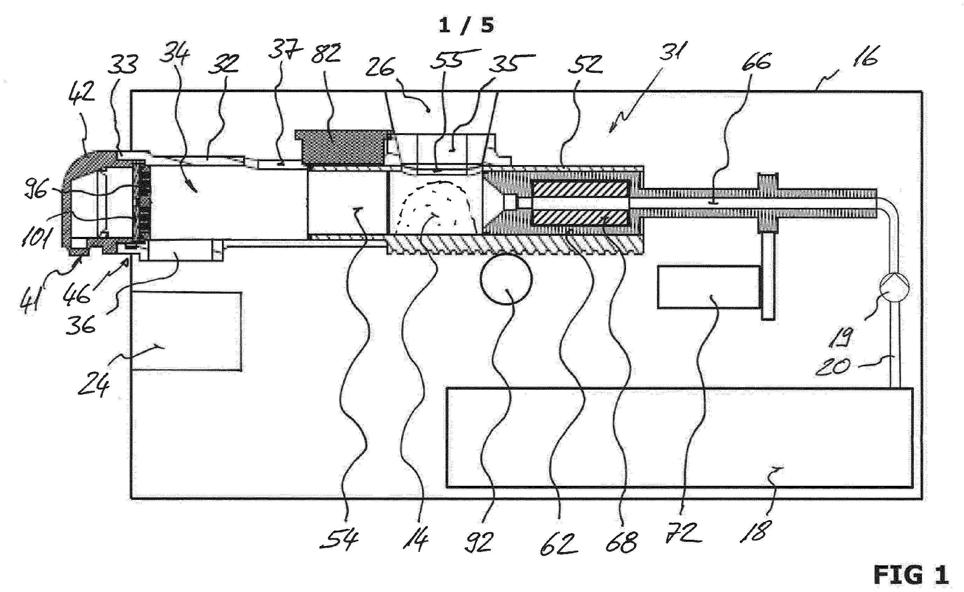

Fig. 1 zeigt eine erfindungsgemässe Kaffeemaschine 16, die eine erfindungsgemässe Brüheinheit 31, einen Wassertank 18, eine Wasserpumpe 19, die in einer Wasserzuführleitung 20 vorgesehen ist, und einen Auffangbehälter 24 für den Kaffeesatz sowie eine Einfüllöffnung 26 für das Kaffeepulver aufweist.

Die Brüheinheit 31 weist einen Brüheinheitskörper 32, ein Auslaufteil 42, das an einem Ende 33 des Brüheinheitskörper 32 lösbar und separierbar angeordnet ist, einen Hülsenzylinder 52, einen Verpresskolben 62 sowie einen ersten Motor 72 zum Antrieb des Verpresskolbens 62 auf. Der Antrieb des Verpresskolbens 62 ist drehmomentgesteuert.

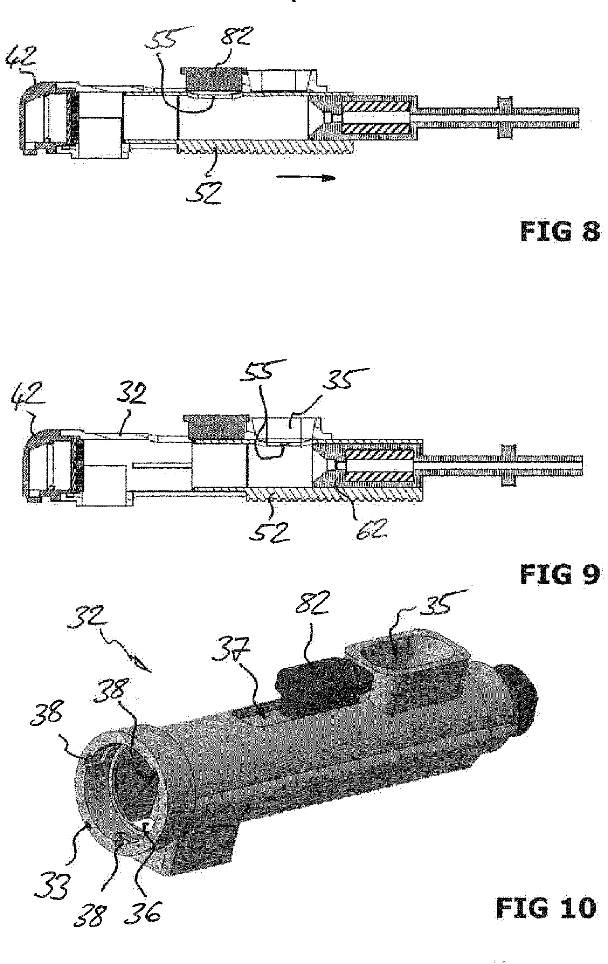

Der Brüheinheitskörper 32 (siehe auch Fig. 10) weist einen Aufnahmebereich 34, eine Brüheinheitskörper-Einfüllöffnung 35 für Kaffeepulver, eine Verschiebeöffnung 37 für einen Verschlussstopfen 82 und eine zu der Brüheinheitskörper-Einfüllöffnung 35 beabstandete Ausgabeöffnung 36 auf. Im Brüheinheitskörper 32 ist eine Verschiebeöffnung 37 vorgesehen, welche sich ausgehend von einem Bereich der Brüheinheitskörper-Einfüllöffnung 35 bereichsweise in Richtung des Auslaufteils 42 erstreckt.

Am Ende 33 des Brüheinheitskörpers 32 sind innenseitig und umfänglich gleichmässig verteilt drei Ausnehmungen 38 vorgesehen, die einen weiblichen Teil eines Bajonettverschlusses 46 bilden.

Der Hülsenzylinder 52 weist eine Hülsenzylinder-Einfüllöffnung 55 für Kaffeepulver und einen Kolbenaufnahmebereich 54 auf. Der Hülsenzylinder 52 ist in dem Aufnahmebereich 34 des Brüheinheitskörpers 32 relativ zu dem Brüheinheitskörper 32 verfahrbar angeordnet. Ein zweiter Motor 92 ist zum Verfahren des Hülsenzylinders 52 vorgesehen, wobei das Verfahren desselben vorteilhaft drehmomentgesteuert erfolgt.

Der Verpresskolben 62 ist in dem Kolbenaufnahmebereich 54 des Hülsenzylinders 52 relativ zu dem Hülsenzylinder 52 verfahrbar angeordnet. Der Verpresskolben 62 ist ebenfalls relativ zu dem Brüheinheitskörper 32 verfahrbar angeordnet. In dem Verpresskolben 62 ist ein Wasserzuführkanal 66 vorgesehen, der mit der Wasserzuführleitung 20 verbunden ist. Zudem ist eine Erwärmungseinrichtung 68 in dem Verpresskolben 62 zur Erwärmung des durch den Wasserzuführkanal 66 zugeführten Wassers angeordnet. Diese Erwärmungseinrichtung 68 ist in dem gezeigten Ausführungsbeispiel eine elektrische Heizpatrone, wobei weitere Erwärmungseinrichtungen ergänzend oder alternativ verwendbar sind.

Ein Verschlussstopfen 82 zum Verschliessen der Hülsenzylinder-Einfüllöffnung 55 des Hülsenzylinders 52 ist vorgesehen, wobei der Verschlussstopfen 82 in der Verschiebeöffnung 37 im Brüheinheitskörper 32 geführt ist. Der Verschlussstopfen 82 ist relativ zu der Längserstreckung der Verschiebeöffnung 37 versetzbar.

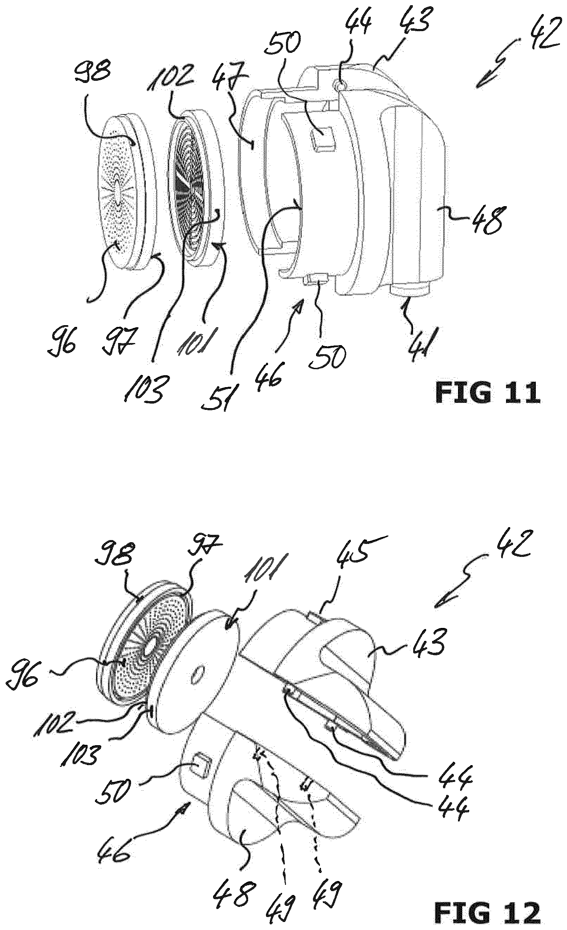

Wie zusätzlich im Detail in den Figuren 11 und 12 ersichtlich, ist das Auslaufteil 42 mittels eines Bajonettverschlusses 46 als Drehverschluss an dem Brüheinheitskörper 32 angeordnet. Das Auslaufteil 42 weist einen mehrteiligen Auslaufteilkörper mit einem ersten Auslaufteilkörperteil 43 und mit einem zweiten Auslaufteilkörperteil 48 auf. An dem ersten Auslaufteilkörperteil 43 sind Nocken 44 vorgesehen, welche beim Zusammenführen der Auslaufteilkörperteile 43 und 48 in Nockenaufnahmen 49 im zweiten Auslaufteilkörperteil 48 eindringen und somit diese zueinander ausrichten. An den Auslaufteilkörperteilen 43 und 48 sind Bajonettnocken 45 bzw. 50 vorgesehen, welche den männlichen Teil des Bajonettverschlusses 46 bilden und in den weiblichen Teil des Bajonettverschlusses 46 am Brüheinheitskörper 32 verbindend eindringen können.

Weiter ist eine Lochplatte 96 sowie eine Druckplatte 101 vorgesehen, welche lösbar und separierbar in einer Auslaufteilaufnahme angeordnet sind. Die Auslaufteilaufnahme wird durch den Nutabschnitt 47 am ersten Auslaufteilkörperteil 43 und durch den Nutabschnitt 51 am zweiten Auslaufteilkörperteil 48 des Auslaufteilkörpers gebildet.

An der Lochplatte 96 ist ein umlaufender Absatzabschnitt 98 vorgesehen, der beim Anordnen des Auslaufteils 42 dichtend in den Brüheinheitskörper 32 eindringt. Weiter ist an der Lochplatte 96 eine umlaufende Nut 97 vorgesehen, in welche ein an der Druckplatte 101 vorgesehener Ringabschnitt 102 im zusammengeführten Zustand der Lochplatte 96 mit der Druckplatte 101 dichtend eindringt. Die Aussenkontur 103 der Druckplatte 101 ist derart ausgebildet, dass die Druckplatte 101 im zusammengeführten Zustand mit dem Auslaufteilkörper dichtend in der durch die Nutabschnitte 47 und 51 gebildete Auslaufteilaufnahme zu liegen kommt. Die Nut 97 der Lochplatte 96, der Absatzabschnitt 98 der Lochplatte 96, der Ringabschnitt 102 der Druckplatte 101, die Aussenkontur 103 der Druckplatte 101, die durch die Nutabschnitte 47 und 51 gebildete Auslaufteilaufnahme des Auslaufteilkörpers, aber auch das Ende 33 des Brüheinheitskörpers 32 bilden Dichtmittel aus.

Anhand der Figuren 1 bis 9 wird nachfolgend das erfindungsgemässe Kaffeebrühverfahren unter Verwendung der Brüheinheit 31 beschrieben.

In der Figur 1 befindet sich der Hülsenzylinder 52 und der Verpresskolben 62 in einer Beladeposition. Die Brüheinheitskörper-Einfüllöffnung 35 des Brüheinheitskörper 32 und die Hülsenzylinder-Einfüllöffnung 55 des Hülsenzylinders 52 sind in Deckung zueinander, so dass Kaffeepulver 14 durch diese einfüllbar ist. Das Kaffeepulver 14 kommt, in Richtung des Auslaufsteil 42 gesehen, vor dem Verpresskolben 62 zu liegen.

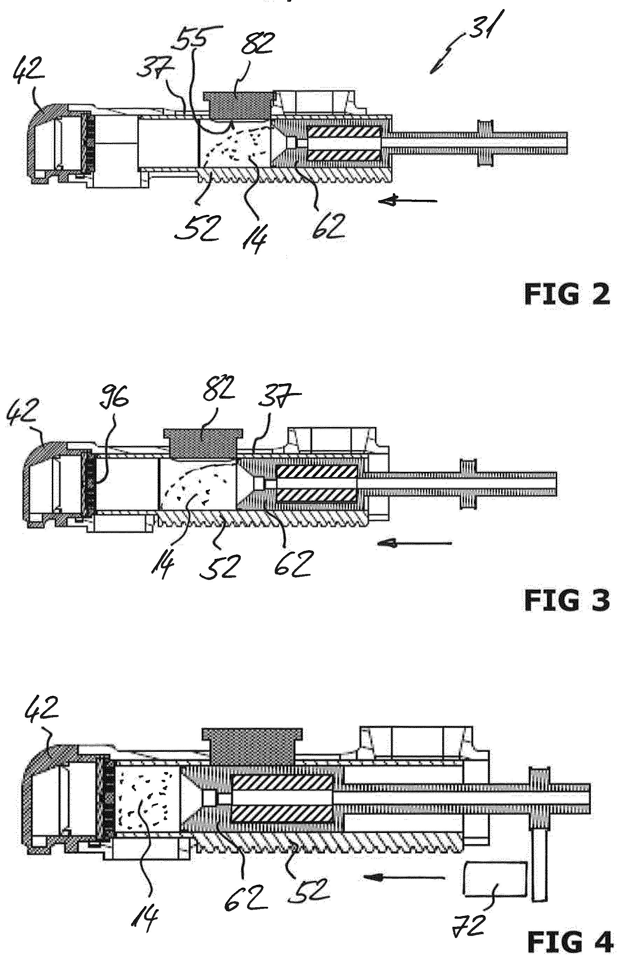

Dann (siehe Figur 2) wird der Hülsenzylinder 52 mit dem Verpresskolben 62 samt Kaffeepulver 14 in Richtung zum Auslaufteil 42 in eine Verschliessposition verfahren, wobei der Verschlussstopfen 82 in die Hülsenzylinder-Einfüllöffnung 55 des Hülsenzylinders 52 eindringt und diese verschliesst.

Anschliessend (siehe Figur 3) wird der Hülsenzylinder 52 mit dem Verpresskolben 62 unter Mitnahme des Verschlussstopfens 82 entlang der Verschiebeöffnung 37 in Richtung zum Auslaufteil 42 in eine Anlageposition verfahren, in welcher der Hülsenzylinder 52 an der Lochplatte 96 dichtend anliegt.

Nun wird der Verpresskolben 62 relativ zum Hülsenzylinder 52 in Richtung zum Auslaufteil 42 zur Verdichtung des Kaffeepulvers 14 verfahren, bis der ein bestimmter Verdichtungsgrad erreicht ist (siehe Figur 4). Die Steuerung des Verfahrwegs des Verpresskolbens 62 zum Erreichen des bestimmten Verdichtungsgrades des Kaffeepulvers 14 erfolgt durch eine Drehmomentsteuerung des ersten Motors 72.

Mittels der Pumpe 19 wird Wasser aus dem Wassertank durch den Wasserzuführkanal 66 im Verpresskolben 62 zum Kaffeepulver 14 gepumpt. Das Wasser wird während dem Zuführen in der in dem Verpresskolben 62 vorgesehenen Erwärmungseinrichtung 68 auf die gewünschte Temperatur erwärmt, durchströmt das Kaffeepulver 14 und tritt durch die Öffnungen in der Lochplatte 96 vorbei an der Druckplatte 101 in das Innere des Auslaufteils 42 sowie aus dem Auslauf 41 heraus.

Sobald die gewünschte Menge des herzustellenden Kaffees ausgebracht ist, wird die Zufuhr des Wassers gestoppt.

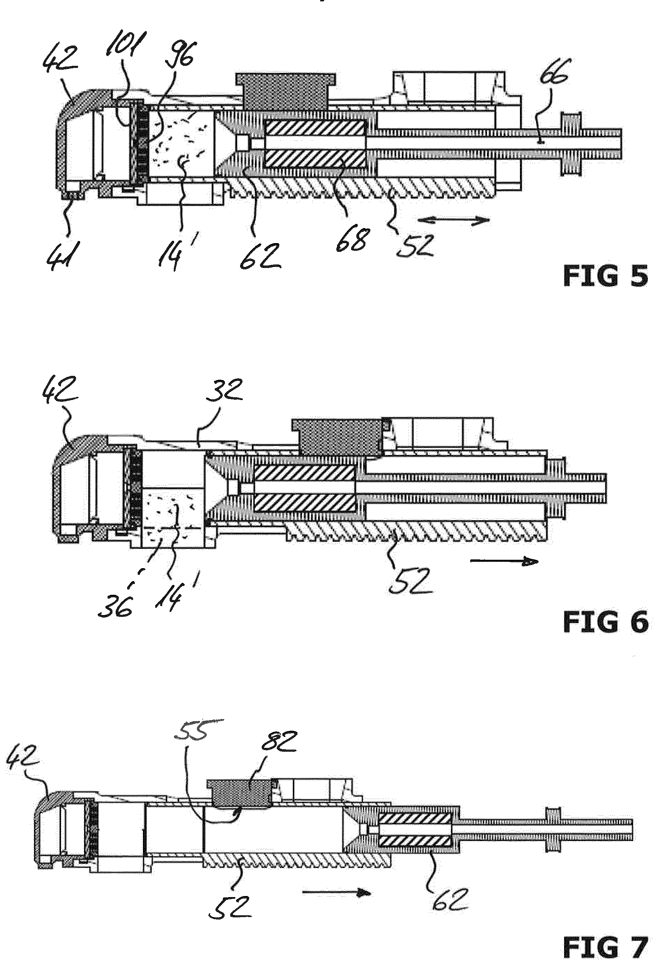

Dann wird der Verpresskolben 62 erneut relativ zum Hülsenzylinder 52 in Richtung zum Auslaufteil 42 verfahren, wobei das durchfeuchtete Kaffeepulver 14 (nun ein Kaffeesatz 14') komprimiert wird. Anschliessend wird der Verpresskolben 62 in Gegenrichtung vom Auslaufteil 42 relativ zum Hülsenzylinder 52 in eine Entlastungsposition verfahren, wobei sich der Kaffeesatz 14' von der Lochplatte 96 sowie dem Ende, das dem Auslaufteil 42 zugewandt ist, des Verpresskolbens 62 löst (Figure 5).

Wie Figur 6 zeigt, wird der Hülsenzylinder 52 in Gegenrichtung zum Auslaufteil 42 in eine erste Rückfahrposition unter Freigabe der Ausgabeöffnung 36 des Brüheinheitskörpers 32 verfahren, so dass der Kaffeesatz 14' durch die Ausgabeöffnung 36 in den Auffangbehälter 24 fällt.

Nun wird der Verpresskolben 62 samt Verschlussstopfen 82 in Gegenrichtung zum Auslaufteil 42 in die Beladeposition verfahren (siehe Figur 7). Der Hülsenzylinder 52 befindet sich in einer Stellung, in welcher der Verschlussstopfen 82 die Hülsenzylinder-Einfüllöffnung 55 des Hülsenzylinders 52 noch verschliesst.

Anschliessend oder gleichzeitig wird der Hülsenzylinder 52 in Gegenrichtung zum Auslaufteil 42 verfahren, wobei der Verschlussstopfen 82 aus der Hülsenzylinder-Einfüllöffnung 55 des Hülsenzylinders 52 versetzt wird (siehe Figur 8).

Dann wird der Hülsenzylinder 52 in Gegenrichtung zum Auslaufteil 42 in die Beladeposition verfahren, in welcher die Brüheinheitskörper-Einfüllöffnung 35 des Brüheinheitskörper 32 und die Hülsenzylinder-Einfüllöffnung 55 des Hülsenzylinders 52 in Deckung sind und erneut Kaffeepulver vor den Verpresskolben 62 für den nächsten Kaffeebrühvorgang eingefüllt werden kann (siehe Figur 9).

### Bezugszeichenliste

- 14: Kaffeepulver
- 14': Kaffeesatz
- 16: Kaffeemaschine

- 18: Wassertank
- 19: Pumpe
- 20: Wasserzuführleitung

- 24: Auffangbehälter

- 26: Einfüllöffnung

- 31: Brüheinheit
- 32: Brüheinheitskörper
- 33: Ende von 32
- 34: Aufnahmebereich von 32
- 35: Brüheinheitskörper-Einfüllöffnung
- 36: Ausgabeöffnung von 32
- 37: Verschiebeöffnung von 32
- 38: Ausnehmungen von 46

- 41: Auslauf von 42
- 42: Auslaufteil
- 43: 1. Auslaufteilkörperteil
- 44: Nocken von 43
- 45: Bajonettnocke von 43
- 46: Bajonettverschluss
- 47: Nutabschnitt von 43
- 48: 2. Auslaufteilkörperteil
- 49: Nockenaufnahme von 48
- 50: Bajonettnocke von 48
- 51: Nutabschnitt von 48
- 52: Hülsenzylinder

- 54: Kolbenaufnahmebereich von 52
- 55: Hülsenzylinder-Einfüllöffnung

- 62: Verpresskolben

- 66: Wasserzuführkanal von 62

- 68: Erwärmungseinrichtung

- 72: 1. Motor für 62

- 82: Verschlussstopfen

- 92: 2. Motor für 52

- 96: Lochplatte
- 97: Nut von 96
- 98: Absatzabschnitt von 96

- 101: Druckplatte
- 102: Ringabschnitt von 101
- 103: Aussenkontur von 101

## Patentansprüche

1. Brüheinheit einer Kaffeemaschine (16)
mit einem Brüheinheitskörper (32), der einen Aufnahmebereich (34), eine Brüheinheitskörper-Einfüllöffnung (35) für Kaffeepulver (14) und eine zu der Brüheinheitskörper-Einfüllöffnung (35) beabstandete Ausgabeöffnung (36) aufweist,
mit einem Auslaufteil (42), das an einem Ende (33) des Brüheinheitskörper (32) angeordnet ist,
mit einem Hülsenzylinder (52), der eine Hülsenzylinder-Einfüllöffnung (55) für Kaffeepulver (14) und einen Kolbenaufnahmebereich (54) aufweist sowie in dem Aufnahmebereich (34) des Brüheinheitskörpers (32) relativ zu dem Brüheinheitskörper (32) verfahrbar angeordnet ist,
mit einem Verpresskolben (62), der in dem Kolbenaufnahmebereich (54) des Hülsenzylinders (52) relativ zu dem Hülsenzylinder (52) verfahrbar angeordnet ist,
**dadurch gekennzeichnet, dass** sie einen ersten Motor (72) zum Antrieb des Verpresskolbens (62) aufweist, wobei der Antrieb des Verpresskolbens (62) drehmomentgesteuert ist.

2. Brüheinheit nach Anspruch 1, **dadurch gekennzeichnet, dass** der Verpresskolben (62) relativ zu dem Brüheinheitskörper (32) verfahrbar angeordnet ist.

3. Brüheinheit nach Anspruch 1 oder 2, **dadurch gekennzeichnet, dass** ein Verschlussstopfen (82) zum Verschliessen der Hülsenzylinder-Einfüllöffnung (55) des Hülsenzylinders (52) vorgesehen ist, wobei der Verschlussstopfen (82) in einer Verschiebeöffnung (37) im Brüheinheitskörper (32) geführt ist.

4. Brüheinheit nach Anspruch 3, **dadurch gekennzeichnet, dass** der Verschlussstopfen (82) relativ zu der Längserstreckung der Verschiebeöffnung (37) versetzbar ist.

5. Brüheinheit nach einem der Ansprüche 1 bis 4, **dadurch gekennzeichnet, dass** ein Wasserzuführkanal (66) in dem Verpresskolben (62) vorgesehen ist und vorzugsweise eine Erwärmungseinrichtung (68) in dem Verpresskolben (62) zur Erwärmung des durch den Wasserzuführkanal (66) zugeführten Wassers angeordnet ist.

6. Brüheinheit nach einem der Ansprüche 1 bis 5, **dadurch gekennzeichnet, dass** das Auslaufteil (42) lösbar und separierbar an dem Brüheinheitskörper (32) angeordnet ist, vorzugsweise mittels eines Drehverschlusses, vorteilhaft eines Bajonettverschlusses (46).

7. Brüheinheit nach einem der Ansprüche 1 bis 6, **dadurch gekennzeichnet, dass** das Auslaufteil (42) einen mehrteiligen Auslaufteilkörper aufweist und vorzugsweise eine Lochplatte (96) sowie eine Druckplatte (101) vorgesehen sind, welche vorteilhaft lösbar und separierbar in einer Auslaufteilaufnahme (47, 51) des Auslaufteilkörpers angeordnet sind.

8. Brüheinheit nach Anspruch 7, **dadurch gekennzeichnet, dass** an der Lochplatte (96) und/oder an der Druckplatte (101) und/oder an der Auslaufteilaufnahme (47, 51) und/oder an dem Brüheinheitskörper (32) Dichtmittel zur dichtenden Aufnahme vorgesehen sind.

9. Kaffeemaschine (16) aufweisend eine Brüheinheit (31) nach einem der Ansprüche 1 bis 8.

10. Kaffeebrühverfahren unter Verwendung einer Brüheinheit (31) nach einem der Ansprüche 1 bis 8, **gekennzeichnet durch** die Schritte:
a) Einfüllen des Kaffeepulvers (14) durch die Brüheinheitskörper-Einfüllöffnung (35) des Brüheinheitskörper (32) und die Hülsenzylinder-Einfüllöffnung (55) des Hülsenzylinders (52), wobei sich der Hülsenzylinder (52) und der Verpresskolben (62) relativ zum Brüheinheitskörper (32) in einer Beladeposition befinden,
b) Verfahren des Hülsenzylinders (52) mit dem Verpresskolben (62) in Richtung zum Auslaufteil (42) in eine Anlageposition, in welcher der Hülsenzylinder (52) dichtend anliegt,
c) Verfahren des Verpresskolbens (62) relativ zum Hülsenzylinder (52) in Richtung zum Auslaufteil (42) zur Verdichtung des Kaffeepulvers (14) bis zum Erreichen eines bestimmten Verdichtungsgrades,
d) Zufuhr von Wasser durch den Verpresskolben (62), bis die gewünschte Menge des zubereitenden Kaffees ausgebracht ist,
e) Erneutes Verfahren des Verpresskolbens (62) relativ zum Hülsenzylinder (52) in Richtung zum Auslaufteil (42),
f) Verfahren des Verpresskolbens (62) in Gegenrichtung vom Auslaufteil (42) relativ zum Hülsenzylinder (52) in eine Entlastungsposition,
g) Verfahren zumindest des Hülsenzylinders (52) in Gegenrichtung zum Auslaufteil (42) in eine erste Rückfahrposition unter Freigabe der Ausgabeöffnung (36) des Brüheinheitskörpers (32),
h) Verfahren des Hülsenzylinders (52) mit dem Verpresskolben (62) in Gegenrichtung zum Auslaufteil (42) in die Beladeposition.

11. Kaffeebrühverfahren nach Anspruch 10, **dadurch gekennzeichnet, dass** vor dem Schritt b)
der Hülsenzylinder (52) mit dem Verpresskolben (62) in eine Verschliessposition verfahren wird, wobei der Verschlussstopfen (82) in die Hülsenzylinder-Einfüllöffnung (55) des Hülsenzylinders (52) diese verschliessend versetzt wird, und
der Hülsenzylinder (52) mit dem Verpresskolben (62) unter Mitnahme des Verschlussstopfens (82) in die Anlageposition verfahren wird.

12. Kaffeebrühverfahren nach Anspruch 11, **dadurch gekennzeichnet, dass** bei dem Schritt i)
der Verschlussstopfen (82) aus der Hülsenzylinder-Einfüllöffnung (55) des Hülsenzylinders (52) versetzt wird.

13. Kaffeebrühverfahren nach einem der Ansprüche 10 bis 12, **dadurch gekennzeichnet, dass** der Verfahrweg des Verpresskolbens (62) zum Erreichen des bestimmten Verdichtungsgrades des Kaffeepulvers (14) durch einen ersten Motor (72) gesteuert erfolgt, wobei vorzugsweise die Steuerung anhand des Motorendrehmoments erfolgt.

14. Kaffeebrühverfahren nach einem der Ansprüche 10 bis 13, **dadurch gekennzeichnet, dass** das Wasser durch den Verpresskolben (62) zugeführt wird und vorzugsweise während dem Zuführen das Wasser in der in dem Verpresskolben (62) vorgesehenen Erwärmungseinrichtung (68) erwärmt wird.

## Claims

1. Brewing unit for a coffee machine (16)
with a brewing unit element (32) which has a receiving area (34), a fill opening (35) in the brewing unit element for filling with coffee powder (14) and a discharge opening (36) located at a distance from the brewing unit element fill opening (35),
with an outflow unit (42) which is arranged on one end (33) of the brewing unit element (32),
with a tubular sleeve (52) which has a tubular sleeve fill opening (55) for coffee powder (14) and a piston receiving area (54), and which is arranged so as to be movable relative to the brewing unit element (32) in the receiving area (34) of the brewing unit element (32),
with a compacting piston (62) which is arranged so as to be movable relative to the tubular sleeve (52) in the piston receiving area (54) of the tubular sleeve (52),
**characterized in that** it has a first motor (72) for driving the compacting piston (62),
wherein the drive of the compacting piston (62) is torque-controlled.

2. Brewing unit according to Claim 1, **characterized in that** the compacting piston (62) is arranged so as to be movable relative to the brewing unit element (32).

3. Brewing unit according to Claim 1 or 2, **characterized in that** a closure plug (82) is provided for closing the tubular sleeve fill opening (55) of the tubular sleeve (52), wherein the closure plug (82) in inserted into a displacement opening (37) in the brewing unit element (32) .

4. Brewing unit according to Claim 3, **characterized in that** the closure plug (82) can be shifted relative to the longitudinal extension of the displacement opening (37) .

5. Brewing unit according to any one of Claims 1 to 4, **characterized in that** a water feed channel (66) is provided in the compacting piston (62) and preferably a warming device (68) is arranged inside the compacting piston (62) for warming the water that is supplied through the water feed channel (66).

6. Brewing unit according to any one of Claims 1 to 5, **characterized in that** the outflow unit (42) is arranged detachably and separably on the brewing unit element (32), preferably by means of a twist closure, advantageously a bayonet closure (46).

7. Brewing unit according to any one of Claims 1 to 6, **characterized in that** the outflow unit (42) has a multipart outflow unit body, and preferably a perforated plate (96) and a pressure plate (101) are provided, which are advantageously arranged detachably and separably in an outflow element seating (47, 51) in the outflow element body.

8. Brewing unit according to Claim 7, **characterized in that** sealing means for sealing accommodation are provided on the perforated plate (96) and/or on the pressure plate (101) and/or on the outflow element seating (47, 51) and/or on the brewing unit element (32) .

9. Coffee machine (16) having a brewing unit (31) according to any one of Claims 1 to 8.

10. Method for brewing coffee using a brewing unit (31) according to any one of Claims 1 to 8, **characterized by** the steps:
a) Filling with coffee powder (14) through the brewing unit element fill opening (35) in the brewing unit element (32) and the tubular sleeve fill opening (55) in the tubular sleeve (52), wherein the tubular sleeve (52) and the compacting piston (62) are in a charging position relative to the brewing unit element (32),
b) Moving the tubular sleeve (52) with the compacting piston (62) in the direction of the outflow unit (42) into a bearing position in which the tubular sleeve (52) forms a seal,
c) Moving the compacting piston (62) in the direction of the outflow unit (42) relative to the tubular sleeve (52) in order to compact the coffee powder (14) until a specified degree of compaction is reached,
d) Supplying water through the compacting piston (62) until the desired quantity of coffee for preparation has been output,
e) Moving the compacting piston (62) in the direction of the outflow unit (42) relative to the tubular sleeve (52) again,
f) Moving the compacting piston (62) in the opposite direction from the outflow unit (42) relative to the tubular sleeve (52), into an discharging position,
g) Moving at least the tubular sleeve (52) in the opposite direction from the outflow unit (42) into a first return position, exposing the dispensing opening (36) of the brewing unit element (32),
h) Moving the tubular sleeve (52) with the compacting piston (62) in the opposite direction to the outflow unit (42) into the charging position.

11. Coffee brewing method according to Claim 10, **characterized in that** before step b)
the tubular sleeve (52) with the compacting piston (62) is moved into a closing position, wherein the closure plug (82) is shifted into the tubular sleeve fill opening (55) of the tubular sleeve (52), closing it off, and
the tubular sleeve (52) with the compacting piston (62) is moved into the bearing position, taking the closure plug (82) with it.

12. Coffee brewing method according to Claim 11, **characterized in that** in step i)
the closure plug (82) is shifted out of the tubular sleeve fill opening (55) in the tubular sleeve (52).

13. Coffee brewing method according to any one of Claims 10 to 12, **characterized in that** the travel path of the compacting piston (62) until the specified degree of compaction of the coffee powder (14) is reached is performed under the control of a first motor (72), wherein the control is preferably applied on the basis of the motor torque.

14. Coffee brewing method according to any one of Claims 10 to 13, **characterized in that** the water is supplied through the compacting piston (62), and the water is preferably warmed in the warming device (68) provided in the compacting piston (62) as it is fed in.

## Revendications

1. Groupe percolateur d'une machine à café (16)
avec un corps de groupe percolateur (32), qui comporte une zone de réception (34), une ouverture de remplissage de corps de groupe percolateur (35) pour du café moulu (14) et une ouverture de distribution (36) à distance de l'ouverture de remplissage du corps de groupe percolateur (35),
avec une partie d'écoulement (42), qui est disposée à une extrémité (33) du corps de groupe percolateur (32), avec un manchon cylindrique (52), qui comporte une ouverture de remplissage de manchon cylindrique (55) pour du café moulu (14) et une zone de réception à piston (54) et est disposé dans la zone de réception (34) du corps de groupe percolateur (32) pouvant être déplacé par rapport au corps de groupe percolateur (32), avec un piston de pression (62), qui est disposé dans la zone de réception à piston (54) du manchon cylindrique (52) pouvant être déplacé par rapport au manchon cylindrique (52),
**caractérisé en ce qu'**
il comporte un premier moteur (72) pour entraîner le piston de pression (62),
sachant que l'entraînement du piston de pression (62) est piloté en fonction du couple.

2. Groupe percolateur selon la revendication 1, **caractérisé en ce que** le piston de pression (62) est disposé pouvant être déplacé par rapport au corps de groupe percolateur (32).

3. Groupe percolateur selon la revendication 1 ou 2, **caractérisé en ce qu'**un bouchon de fermeture (82) est prévu pour fermer l'ouverture de remplissage de manchon cylindrique (55) du manchon cylindrique (52), sachant que le bouchon de fermeture (82) est guidé dans une ouverture de déplacement (37) dans le corps de groupe percolateur (32).

4. Groupe percolateur selon la revendication 3, **caractérisé en ce que** le bouchon de fermeture (82) peut être déplacé par rapport à l'extension longitudinale de l'ouverture de déplacement (37).

5. Groupe percolateur selon l'une quelconque des revendications 1 à 4, **caractérisé en ce qu'**un conduit d'alimentation d'eau (66) est prévu dans le piston de pression (62) et un dispositif de chauffage (68) est disposé de préférence dans le piston de pression (62) pour chauffer l'eau acheminée par le conduit d'alimentation d'eau (66).

6. Groupe percolateur selon l'une quelconque des revendications 1 à 5, **caractérisé en ce que** la partie d'écoulement (42) est disposée sur le corps de groupe percolateur (32) de façon amovible et séparable, de préférence au moyen d'une fermeture rotative, de façon avantageuse d'une fermeture à baïonnette (46).

7. Groupe percolateur selon l'une quelconque des revendications 1 à 6, **caractérisé en ce que** la partie d'écoulement (42) comporte un corps de partie d'écoulement en plusieurs parties et une plaque perforée (96) ainsi qu'une plaque de pression (101) sont de préférence prévues, lesquelles sont disposées avantageusement de façon amovible et séparable dans un logement de partie d'écoulement (47, 51) et/ou sur le corps de partie d'écoulement.

8. Groupe percolateur selon la revendication 7, **caractérisé en ce que** des moyens d'étanchéification pour une réception hermétique sont prévus sur la plaque perforée (96) et/ou sur la plaque de pression (101) et/ou sur le logement de partie d'écoulement (47, 51) et/ou sur le corps de groupe percolateur (32).

9. Machine à café (16) comportant un groupe percolateur (31) selon l'une quelconque des revendications 1 à 8.

10. Procédé de percolation de café utilisant un groupe percolateur (31) selon l'une quelconque des revendications 1 à 8, **caractérisé par** les étapes de :
a) remplissage de café moulu (14) par l'ouverture de remplissage de corps de groupe percolateur (35) du corps de groupe percolateur (32) et l'ouverture de remplissage de manchon cylindrique (55) du manchon cylindrique (52), sachant que le manchon cylindrique (52) et le piston de pression (62) se trouvent dans une position de chargement par rapport au corps de groupe percolateur (32),
b) déplacement du manchon cylindrique (52) avec le piston de pression (62) en direction de la partie d'écoulement (42) dans une position d'appui, dans laquelle le manchon cylindrique (52) s'applique de façon hermétique,
c) déplacement du piston de pression (62) par rapport au manchon cylindrique (52) en direction de la partie d'écoulement (42) pour compacter le café moulu (14) jusqu'à l'obtention d'un degré de compactage déterminé,
d) apport d'eau par le piston de pression (62) jusqu'à ce que la quantité souhaitée de café à préparer soit produite,
e) nouveau déplacement du piston de pression (62) par rapport au manchon cylindrique (52) en direction de la partie d'écoulement (42),
f) déplacement du piston de pression (62) en direction opposée à la partie d'écoulement (42) par rapport au manchon cylindrique (52) dans une position de décharge,
g) déplacement au moins du manchon cylindrique (52) en direction opposée à la partie d'écoulement (42) dans une première position de recul en libérant l'ouverture de distribution (36) du corps de groupe percolateur (32),
h) déplacement du manchon cylindrique (52) avec le piston de pression (62) en direction opposée à la partie d'écoulement (42) dans la position de chargement.

11. Procédé de percolation de café selon la revendication 10, **caractérisé en ce qu'**avant l'étape b)
le manchon cylindrique (52) est déplacé avec le piston de pression (62) dans une position de fermeture, sachant que le bouchon de fermeture (82) est déplacé dans l'ouverture de remplissage de manchon cylindrique (55) du manchon cylindrique (52) en fermant celle-ci, et
le manchon cylindrique (52) est déplacé dans la position d'appui avec le piston de pression (62) en entraînant le bouchon de fermeture (82).

12. Procédé de percolation de café selon la revendication 11, **caractérisé en ce que** lors de l'étape i) le bouchon de fermeture (82) est déplacé de l'ouverture de remplissage de manchon cylindrique (55) du manchon cylindrique (52).

13. Procédé de percolation de café selon l'une quelconque des revendications 10 à 12, **caractérisé en ce que** la course du piston de pression (62) pour atteindre le degré de compactage déterminé du café moulu (14) a lieu commandée par un premier moteur (72), sachant de préférence que la commande a lieu à l'aide du couple du moteur.

14. Procédé de percolation de café selon l'une quelconque des revendications 10 à 13, **caractérisé en ce que** l'eau est acheminée par le piston de pression (62) et l'eau est de préférence chauffée pendant l'acheminement dans le dispositif de chauffage (68) prévu dans le piston de pression (62).
